# FASCICULE DE BREVET EUROPEEN

(11) **EP 0 883 064 B1**
(45) Date de publication et mention de la délivrance du brevet: **17.03.2004**
(21) Numéro de dépôt: 98401261.7
(22) Date de dépôt: 27.05.1998
(51) Int. Cl.: G06F 11/34, G06F 12/08

(54) **Détection de points chauds dans une machine avec mémoire à accès non uniforme.**
Aufspürung von heissen Stellen in einer Maschine mit nichtuniformen Speicherzugriffen
Detection of hot spots in a non-uniform memory access machine

(30) Priorité: 02.06.1997 FR 9706747
(43) Date de publication de la demande: 09.12.1998
(73) Titulaire: BULL S.A., 78430 Louveciennes (FR)
(72) Inventeur: Bordaz, Thierry, 38420 Domère (FR); Raison, Henri, 38000 Grenoble (FR); Sorace, Jean-Dominique, 38190 Lancey (FR)
(74) Mandataire: Jacobson, Claude

(56) Documents cités:
- EP-A- 0 689 141
- US-A- 4 845 615
- LENOSKI D ET AL: "THE DASH PROTOTYPE: LOGIC OVERHEAD AND PERFORMANCE" IEEE TRANSACTIONS ON PARALLEL AND DISTRIBUTED SYSTEMS, vol. 4, no. 1, 1 janvier 1993, pages 41-61, XP000381324
- VERGHESE B ET AL: "OPERATING SYSTEM SUPPORT FOR IMPROVING DATA LOCALITY ON CC-NUMA COMPUTE SERVERS" ACM SIGPLAN NOTICES, vol. 31, no. 9, septembre 1996, pages 279-289, XP000639239

## Description

L'invention concerne une machine informatique avec mémoire à accès non uniforme et cohérence antémémoire.

Dans le domaine informatique, il est possible d'augmenter la puissance d'une machine en augmentant le nombre de processeurs dont elle est composée. Un type de machines connu sous le nom SMP permet aux différents processeurs d'une même machine d'accéder de façon symétrique à sa mémoire au moyen d'un bus système. Ce sont des machines avec mémoire à accès uniforme dans la mesure où le temps d'accès à la mémoire est sensiblement le même pour toutes les données accédées. Cependant, la courbe de performances de telles machines ne croit pas de façon linéaire en fonction du nombre de processeurs. Un nombre élevé de processeurs fait que la machine gère plus de problèmes d'accessibilité à ses ressources qu'elle n'en dispose pour exécuter des applications. Ceci a pour conséquence d'infléchir considérablement la courbe de performances lorsque le nombre de processeurs dépasse une valeur optimale souvent estimée de l'ordre de quatre. L'état de la technique propose différentes solutions à ce problème.

Une solution connue consiste à regrouper en grappes plusieurs machines de façon à les faire communiquer entre elles au moyen d'un réseau. Chaque machine possède un nombre optimal, par exemple de quatre processeurs et son propre système d'exploitation. Elle établit une communication avec une autre machine toutes les fois qu'elle effectue un traitement sur des données détenues à jour par cette autre machine. Le temps nécessaire à ces communications et la nécessité de travailler sur des données cohérentes posent des problèmes de latence pour des applications volumineuses telles que par exemple les applications réparties qui demandent de nombreuses communications. La latence est la durée qui sépare l'instant d'émission d'une requête d'accès à la mémoire et l'instant auquel la réponse à cette requête est reçue.

Une autre solution connue est celle des machines de type NUMA. Ce sont des machines avec mémoire à accès non uniforme (Non Uniform Memory Access en anglais), dans la mesure où le temps d'accès à la mémoire varie selon la localisation des données accédées. Une machine de type NUMA est constituée de plusieurs modules, chaque module comprenant un nombre optimal de processeurs et une partie physique de la mémoire totale de la machine. Une telle machine est à accès mémoire non uniforme car un module accède généralement plus facilement à une partie physique de la mémoire qu'il ne partage pas avec un autre module qu'à une partie qu'il partage. Bien que chaque module possède un bus système privé reliant ses processeurs et sa mémoire physique, un système d'exploitation commun à tous les modules permet de considérer l'ensemble des bus systèmes privés comme un seul et unique bus système de la machine. Un .adressage logique affecte un lieu de résidence à un emplacement de mémoire physique déterminé d'un module. Pour un processeur considéré, on distingue les accès à une partie de mémoire locale, située physiquement sur le même module que le processeur et les accès à une partie de mémoire distante, située physiquement sur un ou plusieurs autres modules que celui où est situé le processeur.

Un type particulier de machines NUMA est le type CCNUMA, c'est à dire celui des machines à cohérence antémémoire (Cache Coherency en anglais). Un mécanisme d'antémémoire partagée fait qu'à un instant donné, une copie valide, c'est à dire à jour, de ce bloc n'est pas nécessairement localisée dans son emplacement de mémoire physique de résidence. Une ou plusieurs copies à jour du bloc peuvent ainsi migrer d'un module à l'autre au gré des demandes applicatives et d'appels système. La mémoire physique, localisée dans un module considéré, est celle à laquelle le module considéré accède le plus rapidement, car directement au moyen de son bus système local. La mémoire physique, éloignée dans un autre module, est celle à laquelle le module considéré accède le moins rapidement, car nécessitant une ou plusieurs transactions entre modules. La mémoire physique, locale au module considéré, comprend une première partie spécialement affectée aux blocs de données résidents dans ce module, et une deuxième partie spécialement affectée aux copies de blocs résidents dans d'autres modules. La deuxième partie de mémoire physique constitue une antémémoire de mémoire éloignée dans les autres modules.

Un bloc résident dans la première partie de mémoire physique n'est pas immédiatement disponible si son contenu ne constitue pas une copie à jour, c'est par exemple le cas si un ou plusieurs autres modules partagent ce bloc et si l'un de ces autres modulés en détient une copie à jour, en termes de cohérence mémoire. Pour gérer le partage de blocs résidents dans sa première partie de mémoire physique, avec d'autres modules, le module considéré dispose d'une table de mémoire locale LMD (Local Memory Directory en anglais). La table LMD est constituée de plusieurs lignes dont chacune est destinée à référencer un bloc résident dans le module et partagé avec un ou plusieurs autres modules.

Un bloc non résident dans la première partie de mémoire physique est immédiatement disponible si une copie à jour de ce bloc est accessible dans la deuxième partie de mémoire physique. Pour gérer la présence de copies à jour dans la deuxième partie de mémoire physique, le module considéré dispose d'une table de mémoire distante RCT (Remote Cache Table en anglais). La table RCT est constituée de plusieurs lignes dont chacune est destinée à correspondre avec un emplacement de la deuxième partie de mémoire physique, chaque emplacement étant destiné à contenir une copie de bloc référencé par cette ligne.

L'intérêt des machines avec mémoire à accès non uniforme et cohérence antémémoire est que chaque module travaille sur des blocs de données résidents dans une première partie de sa mémoire locale ou sur des copies dans une deuxième partie de sa mémoire locale, de blocs résidents dans une première partie de mémoire d'un autre module. Un module considéré n'a alors besoin de communiquer avec d'autres modules que pour travailler sur des copies à jour de façon à assurer une cohérence des données. En exécution, il est donc a priori indifférent qu'un bloc de données soit résident dans un module ou un autre, chaque module rapatriant, si nécessaire, dans sa mémoire locale des copies de blocs dont il a besoin. Cependant, pour une exécution du système d'exploitation commun à tous les modules ou de certaines applications de type réparties, il est possible que certaines données soient souvent utiles à l'ensemble des modules. Ces données concernent, à titre d'exemple non limitatif, des tables d'allocation de processus, des tables de fichiers ouverts ou des tables de prises de verrous sur des ressources partagées. La cohérence de ces données risque de nécessiter de nombreux échanges entre modules et de perturber ainsi l'augmentation de performance attendue de telles machines. Le problème est qu'il est difficile d'évaluer a priori la mesure dans laquelle des données partagées par plusieurs modules risquent de nuire aux performances de la machine, cette nuisance pouvant par ailleurs dépendre du mode d'exploitation de la machine tout autant que des applications qui seront exécutées sur cette machine. D'autre part, il serait dommage d'investir des dépenses d'optimisation concernant des données peu susceptibles de nuire aux performances, au risque de négliger des données dont la localisation risque de nuire de façon plus appréciable à ces performances.

Alors que des études d'utilisation en temps système d'architectures multiprocesseurs ont été décrites notamment par le document "The DASH Prototype: Logic Overhead and Performance", publié par Daniel Lenoski, James Laudon, Truman Joe, David Nakahira, Luis Stevens, Anoop Gupta et John Hennessy, IEEE Transactions on Parallel and Distributed Systems 4 (1993) January, No. 1, New York, U.S. les résultats des études précités sont délivrés sous forme de statistiques en pourcentage de temps d'utilisation processeur, sous forme d'histogramme. Une telle étude ne permet pas d'effectuer un contrôle et une détection des zones d'accès "chaudes" en mémoire associée aux processeurs d'une architecture multiprocesseur.

Bien que le contrôle d'accès entre des adresses de mémoire d'un processeur ait été décrit par le document US-A-4 845 615, un tel contrôle concerne uniquement le contrôle d'exécution d'un logiciel et, en particulier, à des zones mémoires associées à un processeur lors de l'exécution de ce logiciel par un ordinateur en version monoposte. Un tel contrôle ne peut prétendre permettre d'assurer la gestion d'accès à cette zone mémoire à partir d'une pluralité d'autres processeurs d'une architecture multiprocesseurs."

L'invention telle que définie par les revendications propose une machine informatique avec mémoire àaccès non uniforme et cohérence antémémoire, constituée de plusieurs modules, un module considéré comprenant un organe pour assurer une cohérence de données avec d'autres modules, caractérisée en ce que ledit organe comprend au moins:
- un premier registre destiné à contenir une première adresse physique de la mémoire,
- un deuxième registre destiné à contenir une deuxième adresse physique de la mémoire,
- des premiers moyens pour mesurer une quantité d'activité relative à des données dont les adresses sont comprises entre ladite première adresse physique et la dite deuxième adresse physique,
- un troisième registre destiné à contenir une valeur de seuil pour mesurer ladite quantité d'activité,
- des deuxièmes moyens pour détecter un dépassement de ladite valeur de seuil par la quantité d'activité mesurée par les premiers moyens.

Une mesure de la quantité d'activité relative à des données dont les adresses sont comprises entre deux adresses physiques qui constituent une fenêtre dans l'espace mémoire de la machine, permet d'évaluer une latence propre à cette fenêtre, durée qui sépare l'émission d'une requête par une antémémoire privée d'un processeur et la disponibilité d'une réponse correspondante à cette requête dans cette antémémoire privée. L'évaluation peut se faire à partir d'un temps absolu ou d'un nombre de transactions.

L'invention sera mieux comprise à l'aide de la description d'un exemple de réalisation, en référence aux figures.
La figure 1 présente une architecture de machine à quatre modules.
La figure 2 présente certains détails de l'organe précédemment cité, situé dans un module considéré local.
La figure 3 présente certains détails de l'organe précédemment cité, situé dans un module considéré distant.
Les figure 4 à 6 présentent d'autres détail du dit organe pour mettre en oeuvre l'invention.
La figure 7 présente un fonctionnement du dit organe comprenant les détails de la figure 6.

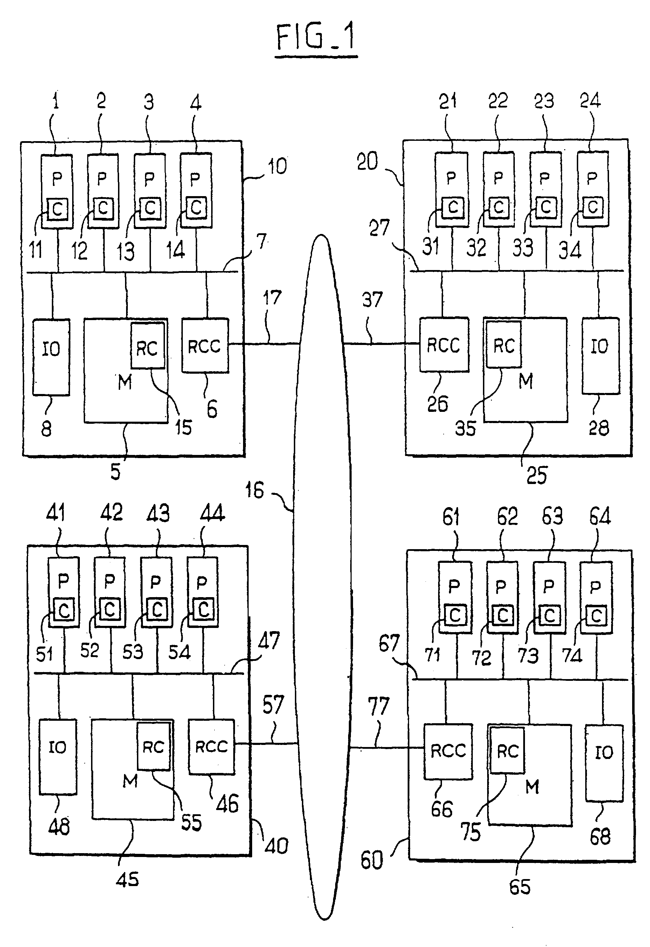

La figure 1 présente un exemple d'architecture de machine à accès de mémoire non uniforme constituée de quatre modules 10, 20, 40 et 60 interconnectés au moyen d'un anneau 16. La description qui suit en référence à la figure 1 reste valable pour un nombre quelconque de modules supérieur ou égal à deux. La connexion entre les modules peut être réalisée au moyen d'un ou plusieurs anneaux commutés ou par tout autre type de connexions tels que les interconnexions en grilles, en hypercube ou par autocommutateur (crossbar en anglais) pour n'en citer que quelques-uns parmi les plus connus. L'interconnexion des modules permet de faire des transactions entre modules qui utilisent le protocole de cohérence de mémoire.

Le module 10 comprend quatre processeurs 1 à 4, une mémoire 5 et un organe 6 de connexion aux autres modules par l'anneau 16. Les différents éléments 1 à 6 sont reliés entre eux par un bus système 7 dans le module 10. Le module 20 comprend quatre processeurs 21 à 24, une mémoire 25 et un organe 26 de connexion aux autres modules par l'anneau 16. Les différents éléments 21 à 26 sont reliés entre eux par un bus système 27 dans le module 20. Le module 40 comprend quatre processeurs 41 à 44, une mémoire 45 et un organe 46 de connexion aux autres modules par l'anneau 16. Les différents éléments 41 à 46 sont reliés entre eux par un bus système 47 dans le module 40. Le module 60 comprend quatre processeurs 61 à 64, une mémoire 65 et un organe 66 de connexion aux autres modules par l'anneau 16. Les différents éléments 61 à 66 sont reliés entre eux par un bus système 67 dans le module 60. L'organe 6, respectivement 26, 46, 66 est connecté sur l'anneau 16 au moyen d'une liaison 17, respectivement 37, 57, 77.

Chaque processeur 1 à 4, 21 à 24, 41 à 44, 61 à 64, possède respectivement une antémémoire privée, interne et ou externe, 11 à 14, 31 à 34, 51 à 54, 71 à 74. De plus, le module 10 comprend une antémémoire 15 d'accès à distance, nommée RC, le module 20 comprend une antémémoire 35 d'accès à distance, nommée RC, le module 40 comprend une antémémoire 55 d'accès à distance, nommée RC, le module 60 comprend une antémémoire 75 d'accès à distance, nommée RC. De façon à pouvoir paramétrer la taille de l'antémémoire 15, 35, 55 et ou 75, il est avantageux de placer physiquement celle-ci dans une zone réservée respectivement de la mémoire 5, 25, 45, 65, tel que le montre la figure 1. Dans ce cas, la suite de la description considère la mémoire 5', respectivement 25', 45', 65' comme constituée de blocs de données de la mémoire 5, respectivement 25, 45, 65 ne comprenant pas de blocs de données de l'antémémoire 15, respectivement 35, 55, 75. Dans le cas où les antémémoires 15, 35, 55, 75 sont réalisées au moyen de composants physiques différents de ceux des mémoires 5, 25, 45, 65, il faut comprendre les références 5', 25', 45', 65', identiques aux références 5, 25, 45, 65.

Chaque processeur 1 à 4, 21 à 24, 41 à 44 et 61 à 64 accède à des blocs de données contenus dans les mémoires 5', 25', 45', 65' au moyen d'adresses logiques d'un seul espace d'adressage, sans distinguer si les mémoires 5', 25', 45', 65' sont locales, appartenant au même module que le processeur, ou distantes, appartenant à un autre module que le processeur. Dans le module 10, c'est l'organe 6 qui distingue si l'adresse logique correspond à une adresse physique locale de bloc résidant dans la mémoire 5', ou si l'adresse logique correspond à une adresse physique distante de bloc résidant dans l'un des modules 20, 40, 60, par exemple au moyen des bits de poids fort de l'adresse logique qui indiquent le module où se situe physiquement la mémoire adressée, les bits de poids faible indiquant alors l'adresse physique à l'intérieur du module de résidence. Dans le module 20, c'est l'organe 26 qui distingue si l'adresse logique correspond à une adresse physique locale de bloc résidant dans la mémoire 25', ou si l'adresse logique correspond à une adresse physique distante de bloc résidant dans l'un des modules 40, 60, 10 par exemple au moyen des bits de poids fort de l'adresse logique qui indiquent le module où se situe physiquement la mémoire adressée, les bits de poids faible indiquant alors l'adresse physique à l'intérieur du module de résidence, et ainsi de suite pour les autres modules. Les bits de poids fort précédemment mentionnés constituent un champ A4 de l'adresse logique. Les blocs de données ainsi accédés constituent un ensemble SM de mémoire partagée par tous les processeurs.

L'exemple qui suit, en référence au processeur 1, reste valable pour chacun des autres processeurs 2 à 4 en référence au module 10 ainsi que 21 à 24 en référence au module 20, 41 à 44 en référence au module 40 et 61 à 64 en référence au module 60.

Le processeur 1 traite un mot contenu dans un bloc B1 de données de l'ensemble SM au moyen de son antémémoire privée 11 suivant un mécanisme connu d'antémémoire, tel que celui à correspondance directe, à correspondance associative ou associative par ensemble de blocs, sans qu'il soit nécessaire ici de rappeler ces différents mécanismes.

Rappelons simplement qu'une antémémoire comprend essentiellement une mémoire à accès rapide et une table dé correspondance non représentées sur les figures. Dans le cas d'un mécanisme à correspondance directe, on distingue essentiellement trois champs dans l'adresse logique d'un mot par ordre décroissant du poids des bits. Un premier champ A1 appelé étiquette, un deuxième champ A2 appelé indexe et un troisième champ A3 appelé adresse du mot dans le bloc de données contenant ce mot. Le premier et le deuxième champ constituent habituellement l'adresse logique du bloc B1. L'indexe A1 pointe sur une ligne d'une table de correspondance qui contient essentiellement deux valeurs. La première valeur est l'étiquette A1' d'un bloc B2 dont une image physique est directement adressée dans la mémoire à accès rapide par ce même indexe. La deuxième valeur est un code de statut qui indique si le bloc B2 est détenu en exclusivité par le processeur, partagé par un autre processeur et dans ce cas si son contenu est valide ou s'il a été modifié par cet autre processeur.

Si l'étiquette A1 du bloc B1 est égale à l'étiquette A1' du bloc B2 et si le code de statut indique une exclusivité ou un contenu valide, le bloc B2 n'est autre que le bloc B1, contenu physiquement dans la mémoire à accès rapide et le processeur peut directement traiter les mots contenus dans ce bloc en les adressant physiquement dans la mémoire à accès rapide au moyen des deuxième et troisième champs de l'adresse logique. Si le code de statut indique un partage, le mécanisme d' antémémoire envoie sur le bus 7 un signal S1 pour indiquer une modification à l'adresse du bloc B1, de façon à modifier le code de statut de ce bloc dans les antémémoires qui le partagent.

Si l'étiquette A1 du bloc B1 est différente de l'étiquette A1' du bloc B2 ou si le code de statut indique un partage et un contenu modifié, le processeur ne peut pas directement traiter les mots contenus dans ce bloc en les adressant physiquement dans la mémoire à accès rapide au moyen des deuxième et troisième champs de l'adresse logique. Si le code de statut indique une exclusivité, le mécanisme d'antémémoire envoie une requête Q2 d'écriture du bloc B2 dans la mémoire partagée de façon à libérer une place dans l'antémémoire à l'adresse physique indiquée par l'indexe A2 puis envoie une requête Q1 de lecture du bloc B1 dans la mémoire partagée de façon à charger le bloc B1 dans l'antémémoire à l'adresse physique indiquée par l'indexe A2. Sinon, le mécanisme d'antémémoire envoie une requête Q1 de lecture du bloc B1 dans la mémoire partagée de façon à charger le bloc B1 dans l'antémémoire à l'adresse physique indiquée par l'indexe A2.

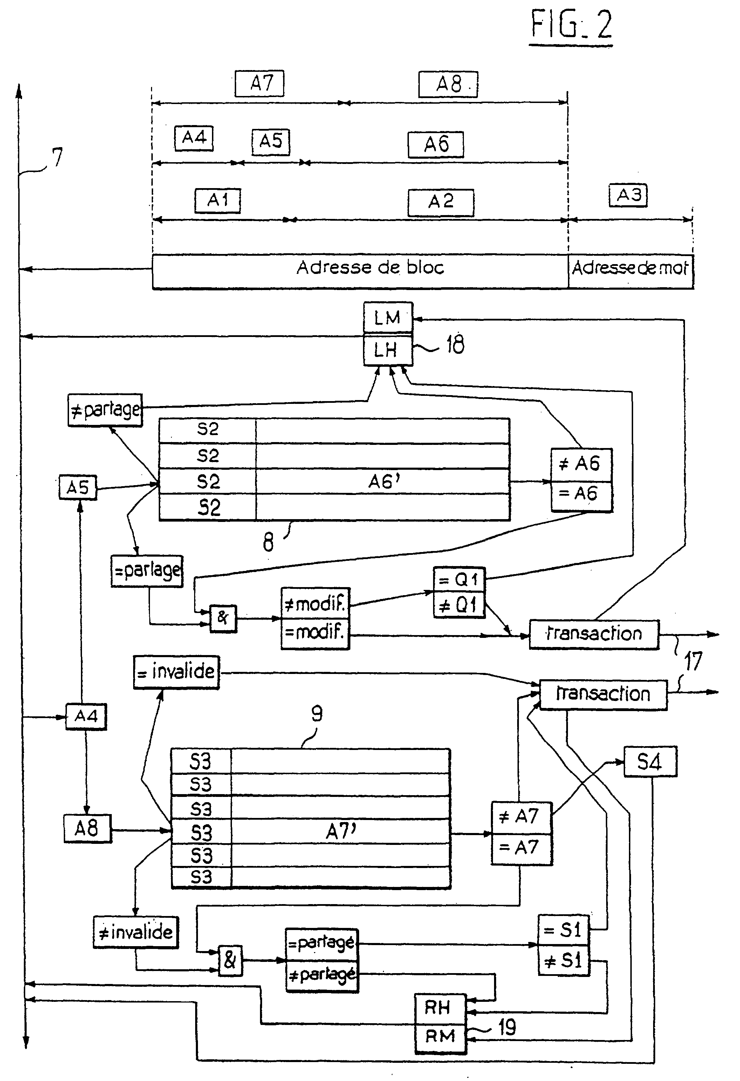

La figure 2 présente un premier niveau de détails de l'organe 6, avec les éléments matériels et logiques mis en oeuvre lorsqu'une adresse de bloc constituée des champs A1 et A2, circule sur le bus 7 en étant liée à un signal S1, une requête Q1 ou Q2. L'organe 6, nommé RCC, comprend une table 8, nommée LMD, une table 9, nommée RCT, un registre 18 et un registre 19. L'adresse du bloc est également partagée en trois champs A4 à A6 ou en deux champs A7 et A8. Le champ A4 est constitué des bits de poids plus fort que ceux du champ A5 et le champ A6 est constitué des bits de poids plus faible que ceux du champ A5. Le champ A8 est constitué des bits de poids faible et le champ A7 est constitué des bits de poids fort en quantité supérieure à celle des bits du champ A4 de façon à recouvrir le champ A4. L'utilité des champs A4 à A8 apparaîtra dans la suite de la description. La logique d'écriture dans les registres 18 et 19 en fonction des valeurs des champs A4 à A8, est représentée au moyen de cellules dans lesquelles des fonctions logiques sont traitées. Chaque paire de cellules contenant le même terme, précédé du signe = dans l'une et du signe ≠ dans l'autre, représente un comparateur dont le résultat active un étage logique en aval. Dans chacun des registres 18 et 19 est écrit l'un de deux états possibles d'un signal, représentés symboliquement par une paire de cellules. La logique décrite peut être réalisée au moyen d'un microprocesseur spécialement dédié à l'organe 6. En réalisant cette logique au moyen de circuits matériels, on augmente sa vitesse d'exécution. Les explications en référence à la figure 2 pour l'organe 6 considéré local au module 10 et distant aux modules 20, 40, 60, restent valables pour les organes 26, 46, 66, en remplaçant les références par permutation circulaire et en particulier, en remplaçant suivant la même permutation circulaire 8 par 28, 48 ou 68, et 9 par 29, 49 ou 69 suivant le module considéré.

Lorsque l'organe 6 voit passer sur le bus 7, le signal S1, la requête Q1 ou la requête Q2, il traite le bloc concerné par un mécanisme antémémoire à l'aide de sa table 8 si les bits de poids fort contenus dans le champ A4 de l'adresse logique indiquent que le bloc concerné réside physiquement dans la mémoire 5', locale au module 10, et à l'aide de sa table 9 si les bits de poids fort de l'étiquette indiquent que le bloc concerné réside physiquement dans l'un des modules 20, 40 ou 60 distant.

La table 8 est indexée par m bits constituant un champ A5 de l'adresse logique succédant aux bits de poids fort de l'étiquette. La valeur du nombre m détermine directement la taille de la table 8 dont le nombre de lignes est alors égal à 2^{m}. Chaque ligne de la table 8 contient les bits de poids faible constituant un champ A6 de l'adresse logique d'un bloc partagé avec un ou plusieurs modules distants et un code de statut S2. Le code de statut S2 est par exemple un multiplet constitué de bits de présence et de bits d'état. A chaque module 20, 40, 60, distant du module 10 dans lequel réside le bloc référencé par les champs A5 et A6, est attribué un bit de présence pour indiquer la présence on non d'un partage de ce bloc avec ledit module distant 20, 40, 60. Le ou les bits d'état indiquent si le bloc est modifié par un module distant. A un instant donné, un seul module détient la copie modifiée qui constitue une version la plus à jour du bloc. C'est à dire que si le code de statut S2 indique une modification, il n'y a plus qu'un seul bit de présence qui indique le partage de ce bloc avec un module distant, c'est le bit attribué au module qui contient la version la plus à jour. La copie du bloc dans le module 10 n'est plus à jour et les copies du bloc dans les autres modules sont invalidées. Si le code de statut n'indique pas de modification, cela signifie que le module 10 détient une copie à jour du bloc et que tous les modules dont le bit de présence est levé, détiennent une copie à jour du bloc, partagée avec le module 10. Si aucun bit de présence n'indique la présence d'un partage avec un module distant, la copie du bloc la plus à jour du bloc se trouve dans le module 10. La ligne de la table 8 correspondante est en fait disponible pour référencer un autre bloc si besoin. Les bits de poids faible de l'adresse logique d'un bloc sont ici les bits qui succèdent aux m bits précédemment mentionnés, de sorte que.la concaténation des champs A4, A5 et A6 recouvre la concaténation des champs A1 et A2. Les champs A5 et A6 permettent d'adresser physiquement le bloc dans la mémoire locale constituée par la mémoire 5'.

Si la ligne indexée par les m bits du champ A5 contient une valeur d'adresse différente de celle du bloc traité, cela signifie qu'aucun autre module que le module 10 n'y accède. Le traitement du bloc reste alors local au module 10 et il n'est pas nécessaire de le répertorier dans la table 8 car sa mise à jour dans la mémoire 5' et éventuellement dans les antémémoires privées 11 à 14 suffit. L'organe 6 génère un signal LH de succès local pour indiquer un accès local honoré (local hit en anglais) sans transaction avec un module distant. Le signal LH est écrit dans le registre 18. Il en est de même si aucun bit du code de statut S2 n'indique de partage avec un module distant.

Si la ligne de la table 8, indexée par les m bits du champ A5, contient une valeur d'adresse A6 égale à celle du bloc traité et qu'au moins un bit du code de statut indique un partage, cela signifie qu'un autre module que le module 10, par exemple le module 20, y a accédé précédemment. Le traitement du bloc dépend alors de son accès précédent par le module 20 distant et du traitement lié à ce bloc. Si le code de statut S2 indique que le bloc est actuellement d'usage partagé, l'organe 6 détermine s'il est nécessaire de faire une transaction avec le module 20 distant.

Si le code de statut S2 indique que le bloc a été modifié par un module distant, une requête Q1 de lecture nécessite une transaction avec le module distant qui détient une copie valide du bloc pour rapatrier cette copie valide dans la mémoire physique résidente dans. le module 10, l'organe 6 génère alors un signal LM d'échec local pour indiquer un accès en mémoire locale manqué (local miss en anglais) qui s'accompagnent d'au moins une transaction avec un module distant. Le signal LM est écrit dans le registre 18, puis l'organe 6 remet à jour le code S2 à un statut non modifié en fin de transaction.

Si le code de statut S2 n'indique pas que le bloc a été modifié par un module distant, une requête Q1 de lecture ne nécessite de transaction avec aucun module distant car le module 10 détient une copie valide du bloc, l'organe 6 génère. alors un signal LH de succès local. Par contre, un signal S1 de modification ou une requête Q2 d'écriture du bloc nécessite une transaction avec chaque module distant pour lequel un bit du code S2 indique une présence, de façon à lui signaler que la copie du bloc qu'il détient, n'est pas valide, l'organe 6 génère alors un signal LM d'échec local.

La génération des signaux LH et LM a été expliqué ici avec un mécanisme antémémoire de réécriture (write back en anglais). Avec un mécanisme antémémoire d'écriture simultanée (write through en anglais), on comprendra que la requête Q1 ne nécessite pas de transaction car le module 10 détient une copie à jour du bloc, l'organe 6 générant alors un signal LH, et que la requête Q2 ou le signal S1 nécessite une transaction avec au moins un module 20 distant pour remettre la copie du bloc à jour dans ce module, l'organe 6 générant alors un signal LM.

La table 9 est indexée par n bits de poids faible de l'adresse logique qui constituent un champ A8. La valeur du nombre n détermine directement la taille de la table 9 dont le nombre de lignes est alors égal à 2ⁿ. Chaque ligne de la table 9 contient un code de statut S3 et le champ A7 de l'adresse logique qui référence une copie de bloc directement indexée dans l'antémémoire 15 par le champ A8. La taille de l'antémémoire 15 est donc de 2ⁿ blocs. Le code de statut S3 est par exemple constitué de deux bits pour coder trois états Inv, Sha, Mod, qui indiquent l'état d'un bloc référencé dans la table 9 par le champ A8. L'état Inv indique que le bloc référencé est invalide, c'est à dire que le bloc référencé a été modifié par un module distant 20, 40 ou 60. L'état Sha indique que le bloc référencé est partagé par au moins un module distant 20, 40, 60. L'état Mod indique que le bloc référencé a été modifié par le module 10 local et que sa copie dans l'antémémoire 15 est à jour.

Si la ligne indexée par les n bits du champ A8 contient une valeur de champ A7' égale à celle du bloc traité, cela signifie que le bloc résident dans un autre module que le module 10, par exemple dans le module 20, a été copié dans l'antémémoire 15 commune aux processeurs 1 à 4. La taille de l'antémémoire est dimensionnée pour contenir 2ⁿ blocs référencés dans la table 9. La taille de la table 9 étant paramétrable par choix de la valeur de n, il en est de même de la taille de l'antémémoire 15. Un moyen intéressant de permettre cette paramétrabilité est de retirer de la mémoire 5 une zone d'adressage réservée et de l'allouer à l'antémémoire 15. Ce moyen est alors reporté dans chaque module distant 20, 40, 60 pour allouer une zone d'adressage réservé dans la mémoire 25, 45, 65 à une antémémoire 35, 55, 75. La taille des antémémoires 15, 35, 55, 75 étant faible devant celle des mémoires 5, 25, 45, 65, ce moyen ne diminue que faiblement la taille de la mémoire commune à tous les modules.

L'organe 6 considère alors le code de statut S3 du bloc référencé dans la table 9, c'est à dire du bloc traité par le signal S1 ou une requête Q1, Q2. Si le code de statut S3 indique que le bloc est invalide, l'organe 6 génère les mêmes transactions et les mêmes signaux que si la ligne indexée par les n bits du champ A8 contient une valeur de champ A7' différente de celle du bloc traité, tel qu'expliqué plus loin dans la description.

Si le code de statut S3 indique que le bloc n'est pas partagé par un autre module, aucune transaction avec un module distant n'est nécessaire et l'organe 6 génère un signal RH de succès distant pour indiquer un accès en mémoire distante honoré (remote hit en anglais) sans transaction avec un module distant.

Si le code de statut dans la table 9 indique que le bloc est actuellement d'usage partagé, l'organe 6 détermine s'il est nécessaire de faire une transaction avec le module 20 distant. Pour le signal S1, une transaction est nécessaire pour écrire dans le code de statut S2 du module 20, dans lequel le bloc est résident, que le bloc est modifié, et dans le code de statut S3 du module 40 ou 60 qui possède une copie du bloc dans son antémémoire 55, 75, que le bloc est invalide; l'organe 6 génère alors un signal RM d'échec distant pour indiquer un accès distant manqué (remote miss en anglais) pour lequel au moins une transaction avec un module distant est déclenchée. L'organe 6 déclare dans son code de statut S3 que le bloc est modifié. Pour la requête Q2 d'écriture dans la mémoire, distante au module 10, aucune transaction n'est nécessaire et l'organe 6 génère un signal RH de succès distant. Pour la requête Q1 de lecture; si le code de statut S3 dans la table 9 indique que le contenu du bloc dans le module 10 est valide, aucune transaction n'est nécessaire et l'organe 6 génère alors un signal RH de succès distant; si le code de statut dans la table 9 indique que le contenu du bloc dans le module 10 est invalide, une transaction est nécessaire pour mettre à jour le contenu du bloc dans le module 10 et l'organe 6 génère alors un signal RM d'échec distant et déclare en fin de transaction que le bloc est valide dans son code de statut S3. La génération des signaux RH et RM a été expliqué ici avec un mécanisme antémémoire de réécriture. Avec un mécanisme antémémoire d'écriture simultanée (write through en anglais), il suffit de modifier la logique décrite de sorte que le signal S1 et la requête Q2 nécessitent une transaction avec le module 20, 40, 60 distant pour y remettre le bloc à jour, le module 6 générant alors un signal RM, et de sorte que la requête Q1 ne nécessite pas de transaction car le contenu du bloc est systématiquement remis à jour.

Si la ligne indexée par les n bits contient une valeur d'adresse différente de celle du bloc traité, cela signifie que le bloc adressé logiquement dans l'antémémoire 15 par l'indexation de la table 9, est différent du bloc traité. Il est alors nécessaire de remplacer le bloc référencé dans la table 9 par le bloc traité. L'organe 6 génère alors un signal RM. L'organe 6 génère aussi dans ce cas un signal S4 pour indiquer un remplacement dans l'antémémoire 15, du bloc répertorié par le bloc traité. Le signal S4 est émis sur le bus 7 pour invalider, dans les antémémoires privées 11 à 14, le bloc répertorié dans l'antémémoire 15 car la table 9 ne pourra plus assurer sa cohérence. L'organe 6 informe aussi l'organe 26, 46 ou 66 du module de résidence qu'il ne référence plus le bloc de sorte que l'organe 26, 46 ou 66 baisse le bit de présence correspondant au module 10 dans la ligne de la table 28, 48 ou 68 ou le bloc était référencé. L'organe 6 effectue ensuite une remise à jour de la table 9 au moyen d'une transaction avec les modules 20, 40 et 60 distants pour rapatrier le bloc traité à un emplacement physique adressé logiquement dans l'antémémoire 15 par l'indexation de la table 9. La transaction consiste essentiellement à émettre une requête de lecture à destination du module distant 20, 40 ou 60 de résidence du bloc. Pour simplifier la description, nous supposons par exemple que le module de résidence du bloc est le module 20.

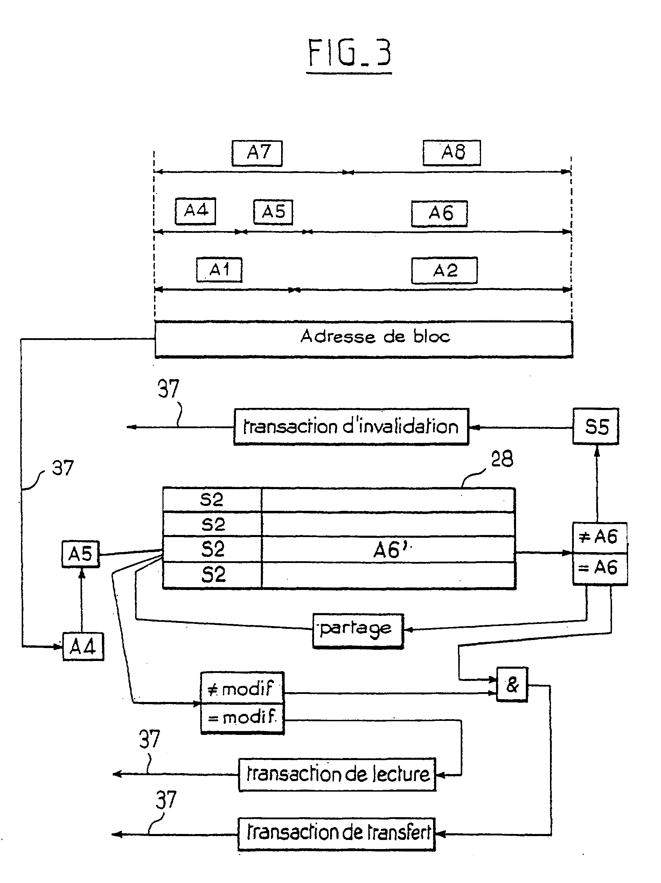

La figure 3 présente un deuxième niveau de détails de l'organe 6, 26, 46, 66, avec les éléments matériels et logiques mis en oeuvre lorsqu'une adresse de bloc constituée des champs A1 et A2, arrive dans le module de résidence de ce bloc, en provenance d'autres modules par la liaison 17, 37, 57, 77. Les remarques faites dans le préambule d'introduction à la figure 2 restent valables pour la figure 3. En particulier les références mises sur la figure 3 sont celles de l'organe 26 pour faciliter la suite de la description.

Si le bloc traité est répertorié dans la table 28, son code de statut S2 est mis à jour pour indiquer que le bloc est partagé par le module 10. Si, à la ligne de la table 28 répertoriant le bloc traité, le codé de statut S2 indique que le bloc n'est modifié par aucun autre module 40, 60, l'organe 26 transmet une copie du bloc à l'organe 6. Cette copie est obtenue par lecture dans la mémoire 25 ou dans l'une des antémémoires 31 à 34. Si le code de statut indique que le bloc est modifié, l'organe 26 émet une requête de lecture vers celui des modules 40, 60 qui possède la version la plus à jour du bloc. L'organe 46, 66 qui possède la copie la plus à jour, transmet la copie du bloc à l'organe 6 du module 10 et à l'organe 26 du module 20. L'organe 26 remet à jour sa mémoire locale 25', et son code S2 au statut partagé. L'organe 6 répertorie le bloc dans la table 9 avec un code de statut partagé et non modifié et écrit le bloc dans l'antémémoire 15. Ensuite, l'organe 6 émet un acquittement vers l'organe 26 qui ajoute dans son code de statut S2 le partage avec le module 10.

Si le bloc traité n'est pas répertorié dans la table 28, l'organe 26 génère un signal S5 pour indiquer que le bloc répertorié sera remplacé par le bloc traité. Si le code de statut S2 du bloc répertorié indique que celui-ci a été modifié par un module 10, 40 ou 60, l'organe 26 émet une requête de lecture vers celui des modules 10, 40, 60 qui détient la version la plus à jour du bloc. L'organe 6, 46, 66 dont le code S3 du bloc référencé indique que sa copie du bloc est modifiée, transmet une copie du bloc à l'organe 26 du module 20 pour remettre à jour sa mémoire locale 25'. Le signal S5 est émis vers le ou les organes 6, 46, 66 qui référencent le bloc à une ligne de leur table 9, 49, 69, de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15. Si le code de statut S2 du bloc répertorié dans la table 28, n'indique pas que celui-ci a été modifié, le signal S5 est émis vers le ou les organes 6, 46, 66 qui référencent le bloc à une ligne de leur table 9, 49, 69 de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15.

Les explications qui précèdent s'appuient sur un mécanisme antémémoire à correspondance directe. La mise en oeuvre de l'enseignement ainsi procuré né devrait pas poser de difficulté insurmontable à l'homme du métier pour utiliser d'autres mécanismes antémémoire connus tels que ceux à correspondance associative ou à correspondance associative par ensemble blocs, dans tout ou partie des antémémoires privées 11 à 14, 31 à 34, 41 à 44, 61 à 64 et des tables 8, 9, 28, 29, 48, 49, 68, 69.

En particulier, il est intéressant d'utiliser dans les tables 8, 28, 48, 68, une correspondance associative par ensemble de blocs. Pour un même nombre m de bits constituant le champ A5, une correspondance associative par ensemble, par exemple de quatre blocs, nécessite quatre fois plus de mémoire pour la table 8 qu'une correspondance directe, car chaque ligne peut alors référencer quatre blocs avec chacun son code de statut S2. Cependant, en correspondance directe, lorsqu'un bloc nécessite d'être référencé à une ligne indexée par son champ A5, il n'y a pas de problème si la ligne est disponible mais il est nécessaire de faire un remplacement si la ligne référence déjà un autre bloc dont le champ A6' est différent du champ A6 du bloc à référencer. Une ligne est disponible si aucun bloc n'y est référencé ou si le code de statut S2 du bloc déjà référencé n'indique aucune présence de partage avec un module distant, la référence d'un tel bloc étant alors dite invalide. Avantageusement, en correspondance associative par ensemble, par exemple de quatre blocs, une ligne est disponible si moins de quatre blocs y sont référencés ou si la référence d'au moins un bloc déjà référencé est invalide. Les chances pour que la référence d'un bloc déjà référencé soit invalide avant qu'un nouveau bloc soit à référencer ont ainsi augmenté en comparaison d'un mécanisme à correspondance directe. Si un remplacement est nécessaire à cause d'une indisponibilité de ligne, celui-ci peut se faire sur le bloc le plus ancien ou sur le bloc avec le plus petit nombre de bits de présence levés dans son code de statut S2. On diminue ainsi l'éventualité qu'un autre module redemande immédiatement de référencer un bloc qui vient d'être remplacé.

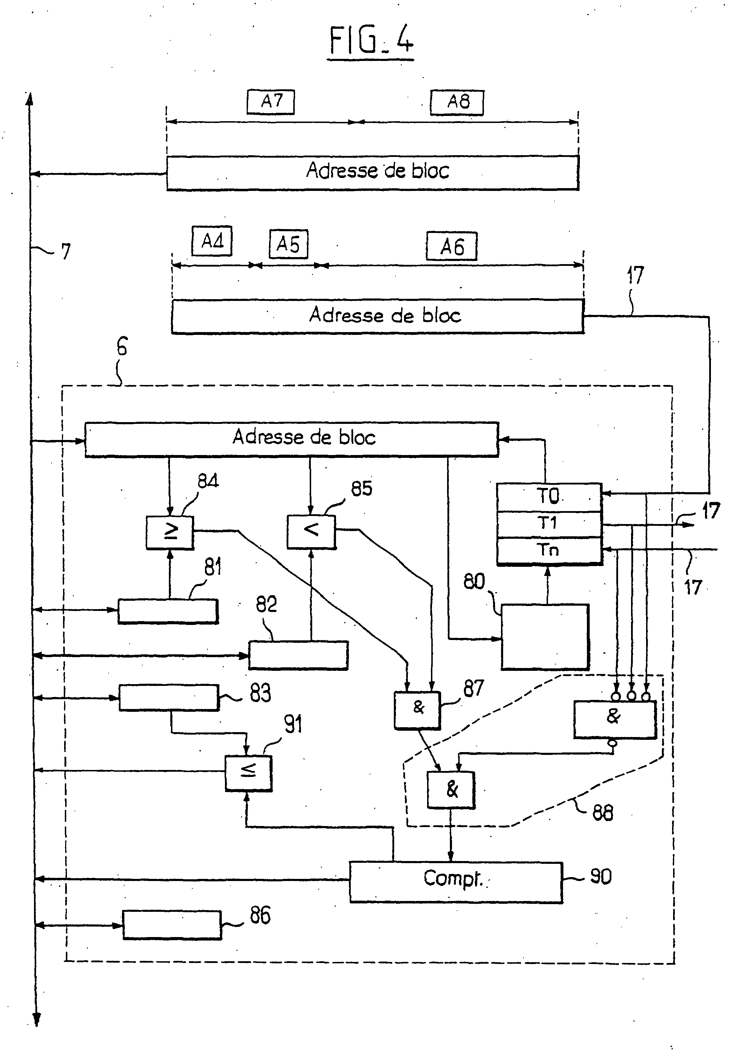

La figure 4 présente des détails supplémentaires de l'organe 6. Un registre 81 est destiné à contenir une première adresse logique à l'intérieur de l'espace mémoire de la machine. Un registre 82 est destiné à contenir une deuxième adresse logique à l'intérieur de l'espace mémoire de la machine. La première adresse logique, dite adresse de début, est inférieure à la deuxième adresse logique, dite adresse de fin. Lorsque l'organe 6 génère une transaction relative à une adresse de bloc, précédemment prise en compte depuis le bus 7 ou la liaison 17, cette adresse est comparée au contenu du registre 81 au moyen d'un comparateur 84 et au contenu du registre 82 au moyen d'un comparateur 85. Si l'adresse de bloc est supérieure au contenu du registre 81 et inférieure au contenu du registre 82, un circuit logique 87 signale une appartenance du bloc à une fenêtre de la mémoire de la machine, délimitée par ladite adresse de début et ladite adresse de fin.

Nous avons vu en référence aux figures 2 et 3 que, suite à une prise en compte d'une adresse de bloc, différents éléments logiques de l'organe 6 génèrent une ou plusieurs transactions en fonction du contenu des tables 8 et 9. Ces différents éléments logiques sont symboliquement regroupés dans un circuit logique 80, de sorte à ne pas. surcharger inutilement la figure. Chaque fois que l'organe 6 émet ou reçoit une transaction sur la liaison 17, un circuit logique 88 incrémente un compteur 90 si le circuit logique 87 signale une appartenance du bloc à la fenêtre de la mémoire de la machine, délimitée par ladite adresse de début et ladite adresse de fin.

Le contenu du compteur 90 représente alors une quantité d'activité concernant les données adressées dans la fenêtre délimitée par ladite adresse de début et ladite adresse de fin, en termes de nombre de transactions du module local 10 avec les modules distants 20, 40, 60. On définit dans ce cas une chaleur de ladite fenêtre comme étant une grandeur proportionnelle à cette quantité d'activité.

Un registre 83 est destiné à contenir une valeur de seuil, en terme de nombre de transactions du module local 10 avec les modules distants 20, 40, 60. Un comparateur 91 émet un signal d'interruption sur le bus 7 lorsque le contenu du registre 83 est inférieur au contenu du compteur 90.

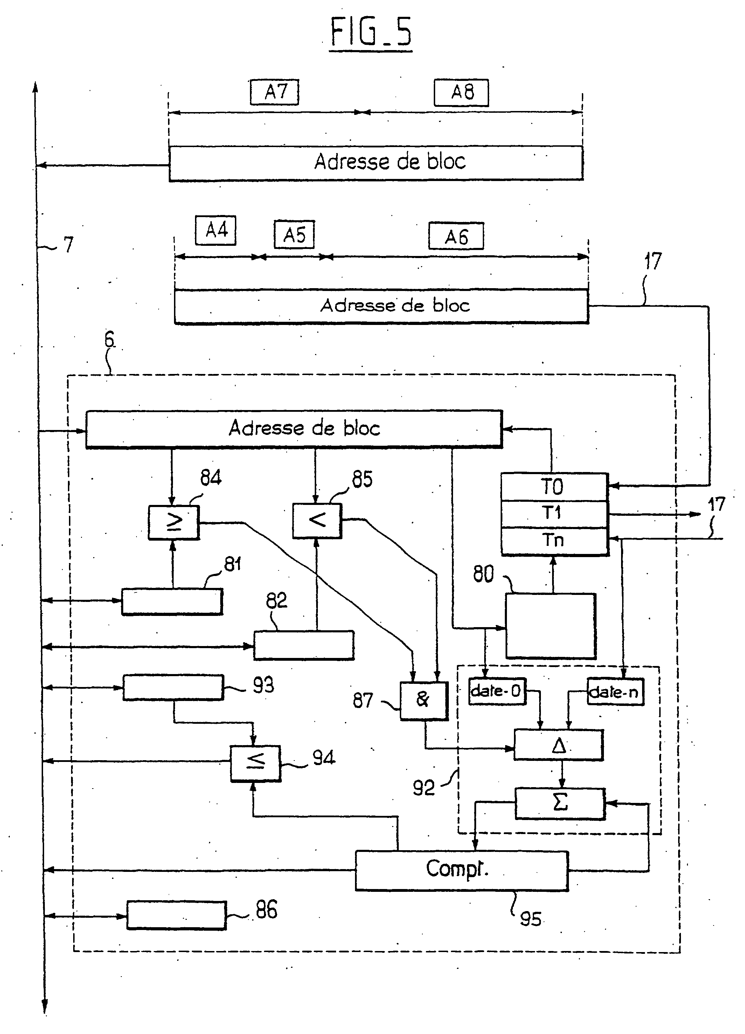

La figure 5 présente d'autres détails de l'organe 6. Un registre 81 est destiné à contenir une première adresse logique à l'intérieur de l'espace mémoire de la machine. Un registre 82 est destiné à contenir une deuxième adresse logique à l'intérieur de l'espace mémoire de la machine. La première adresse logique, dite adresse de début, est inférieure à la deuxième adresse logique, dite adresse de fin. Lorsque l'organe 6 génère une transaction relative à une adresse de bloc, précédemment prise en compte depuis le bus 7 ou la liaison 17, cette adresse est comparée au contenu du registre 81 au moyen d'un comparateur 84 et au contenu du registre 82 au moyen d'un comparateur 85. Si l'adresse de bloc est supérieure au contenu du registre 81 et inférieure au contenu du registre 82, un circuit logique 87 signale une appartenance du bloc à une fenêtre de la mémoire de la machine, délimitée par ladite adresse de début et ladite adresse de fin.

Nous avons vu en référence aux figures 2 et 3 que, suite à une prise en compte d'une adresse de bloc, différents éléments logiques de l'organe 6 génèrent une ou plusieurs transactions en fonction du contenu des tables 8 et 9. Ces différents éléments logiques sont symboliquement regroupés dans un circuit logique 80, de sorte à ne pas surcharger inutilement la figure. Lorsqu'à une date-n, l'organe 6 reçoit une dernière transaction Tn sur la liaison 17 résultant de la prise en compte de l'adresse de bloc à une date-0, une unité arithmétique 92 soustrait la date-0 de la date-n si le circuit logique 87 signale une appartenance du bloc à la fenêtre de la mémoire de la machine, délimitée par ladite adresse de début et ladite adresse de fin. L'unité arithmétique 92 ajoute alors le résultat ainsi obtenu au contenu du compteur 95.

Le contenu du compteur 95 représente alors une quantité d'activité concernant les données adressées dans la fenêtre délimitée par ladite adresse de début et ladite adresse de fin, en termes de latences cumulées de transactions du module local 10 avec les modules distants 20, 40, 60. On définit dans ce cas une chaleur de ladite fenêtre comme étant une grandeur proportionnelle à cette quantité d'activité.

Un registre 93 est destiné à contenir une valeur de seuil, en terme de latences cumulées de transactions du module local 10 avec les modules distants 20, 40, 60. Un comparateur 94 émet un signal d'interruption sur le bus 7 lorsque le contenu du registre 93 est inférieur au contenu du compteur 95.

Les registres 81, 82, 83 et 93 sont accessibles en lecture et en écriture sur le bus 7. Les compteurs 90, 95 sont accessibles en lecture seule sur le bus 7. Un registre de contrôle 86 est accessible en lecture écriture pour permettre à un processus exécuté dans le module 10, de gérer la lecture des compteurs 90, 95 en fonction d'états bas et hauts de par exemple cinq bits numérotés de zéro à quatre. L'état bas du bit zéro empêche toute incrémentation du compteur 90 par le circuit logique 88 ou du compteur 95 par l'unité arithmétique 92. L'état haut du bit zéro n'empêche pas l'incrémentation du compteur 90 par le circuit logique 88 ou du compteur 95 par l'unité arithmétique 92. L'état bas du bit un empêche toute interruption générée par les comparateurs 91, 94 d'intervenir sur l'incrémentation du compteur 90 par le circuit logique 88 ou du compteur 95 par l'unité arithmétique 92. L'état haut du bit un empêche toute incrémentation du compteur 90 par le circuit logique 88 ou du compteur 95 par l'unité arithmétique 92, suite à une interruption générée par le comparateur 91, 94. L'état bas du bit deux désactive toute génération d'interruption par les comparateurs 91 et 94. L'état haut du bit deux active la génération d'interruption par les comparateurs 91 ou 94 lorsque le contenu du compteur 90 dépasse le contenu du registre 83 ou le contenu du compteur 95 dépasse le contenu du registre 93. L'état bas du bit trois n'intervient pas sur l'évolution du compteur 90. L'état haut du bit trois positionne le contenu du compteur 90 à une valeur nulle. L'état bas du bit quatre n'intervient pas sur le contenu du compteur 95. L'état haut du bit quatre positionne le contenu du compteur 95 à une valeur nulle.

Lorsque l'organe 6 prend en compte une adresse de bloc circulant sur le bus 7, on distingue essentiellement trois classes d'espace de la mémoire de la machine, un espace à accès non partagé, un espace à accès partagé en lecture et un espace partagé en écriture et ou en lecture.

Pour un bloc appartenant à l'espace à accès non partagé, aucune transaction du module local 10 avec un module distant 20, 40, 60 n'est nécessaire car le module 10 est alors le seul à détenir une copie à jour du bloc. Une fenêtre de la mémoire de la machine, délimitée par ladite adresse de début et ladite adresse de fin, intégralement contenue dans cet espace, est dite froide car sa chaleur définie en référence à la figure 4 ou en référence à la figure 5 est nulle.

Pour un bloc appartenant à l'espace à accès partagé en lecture et ou en écriture, une ou plusieurs transactions du module local 10 avec un module distant 20, 40, 60 sont nécessaires, en particulier si le module 10 ne détient pas une copie à jour du bloc. Une fenêtre de la mémoire de la machine, délimitée par ladite adresse de début et ladite adresse de fin, à intersection non nulle avec cet espace, est dite chaude car sa chaleur définie en référence à la figure 4 ou en référence à la figure 5 est positive.

La structure matérielle de l'organe 6 que nous venons de décrire permet de mettre en oeuvre différents processus logiciels pour mesurer la chaleur d'une fenêtre de la mémoire de la machine.

Prenons comme exemple un processus mesurant la chaleur proportionnelle à une quantité d'activité en terme de nombre de transactions. Les bits zéro à quatre du registre 86 sont initialement positionnés à un état haut pour forcer le contenu du compteur 90 à une valeur nulle. Une adresse de début est écrite dans le registre 81 et une adresse de fin est écrite dans le registre 82 de façon à déterminer une fenêtre pour laquelle seront comptées les transactions concernant les blocs de données adressés dans cette fenêtre. Une valeur de seuil est écrite dans le registre 83 pour déterminer une quantité maximale d'activité atteinte par le compteur 90. Le bit zéro du registre 86 est positionné à un état bas pour activer le comptage des transactions concernant la fenêtre déterminée; simultanément, une date ddc à laquelle le bit zéro du registre 86 est positionné à l'état bas, est mémorisée. A réception de l'interruption générée par le comparateur 91, une durée de comptage est calculée, en cycles d'horloge de la machine, comme étant la différence entre la date ddc et une date dfc de génération de l'interruption. La chaleur de la fenêtre est calculée en divisant le contenu du compteur 90 par la durée de comptage. En absence de réception d'interruption générée par le comparateur 91 à une date dmc maximale de comptage, une durée de comptage est calculée, en cycles d'horloge de la machine, comme étant la différence entre la date ddc et la date dmc. La chaleur de la fenêtre est calculée en divisant le contenu du compteur 90 par la durée de comptage. La chaleur ainsi calculée est homogène à une quantité de transactions par unité de temps.

Prenons comme exemple un processus mesurant la chaleur proportionnelle à une quantité d'activité en terme de latences cumulées de transactions. Les bits zéro à trois et cinq du registre 86 sont initialement positionnés à un état haut pour forcer le contenu du compteur 95 à une valeur nulle. Une adresse de début est écrite dans le registre 81 et une adresse de fin est écrite dans le registre 82 de façon à déterminer une fenêtre pour laquelle seront comptées les transactions concernant les blocs de données adressés dans cette fenêtre. Une valeur de seuil est écrite dans le registre 93 pour déterminer une quantité maximale d'activité atteinte par le compteur 95. Le bit zéro du registre 86 est positionné à un état bas pour activer le cumul des latences concernant la fenêtre déterminée; simultanément, une date ddc à laquelle le bit zéro du registre 86 est positionné à l'état bas, est mémorisée. A réception de l'interruption générée par le comparateur 94, une durée de comptage est calculée, en cycles d'horloge de la machine, comme étant la différence entre la date ddc et une date dfc de génération de l'interruption. La chaleur de la fenêtre est calculée en divisant le contenu du compteur 95 par la durée de comptage. En absence de réception d'interruption générée par le comparateur 94 à une date dmc maximale de comptage, une durée de comptage est calculée, en cycles d'horloge de la machine, comme étant la différence entre la date ddc et la date dmc. La chaleur de la fenêtre est calculée en divisant le contenu du compteur 95 par la durée de comptage. La chaleur ainsi calculée est un nombre adimensionnel.

Si l'organe 6 comprend le compteur 90 et le compteur 95, prenons comme exemple un processus mesurant la chaleur proportionnelle à une quantité d'activité en terme de durée moyenne d'une transaction. Les bits zéro à cinq du registre 86 sont initialement positionnés à un état haut pour forcer le contenu des compteurs 90 et 95 à une valeur nulle. Une adresse de début est écrite dans le registre 81 et une adresse de fin est écrite dans le registre 82 de façon à déterminer une fenêtre pour laquelle seront comptées les transactions concernant les blocs de données adressés dans cette fenêtre. Une valeur de seuil est écrite dans le registre 83 et une valeur de seuil est écrite dans le registre 93 pour déterminer une quantité maximale d'activité atteinte par le compteur 90 ou le compteur 95. Le bit zéro du registre 86 est positionné à un état bas pour activer le comptage des transactions concernant la fenêtre déterminée; simultanément, une date ddc à laquelle le bit zéro du registre 86 est positionné à l'état bas, est mémorisée. A réception de l'interruption générée par le comparateur 91 ou par le comparateur 94. La chaleur de la fenêtre est calculée en divisant le contenu du compteur 95 par le contenu du compteur 90. En absence de réception d'interruption générée par le comparateur 91 ou par le comparateur 94 à une date dmc maximale de comptage, si le contenu du compteur 90 est nul, la chaleur de la fenêtre est calculée nulle. Si le contenu du compteur 90 est non nul, la chaleur de la fenêtre est calculée en divisant le contenu du compteur 95 par le contenu du compteur 90. La chaleur ainsi calculée est homogène à un temps.

L'unité d'évaluation de la chaleur importe peu dans la mesure où on ne cherche pas à déterminer une chaleur absolue de fenêtre mais à comparer les chaleurs de différentes fenêtres dans une même unité, de façon à déterminer la ou les fenêtres les plus chaudes. On considère généralement la chaleur d'une fenêtre comme une grandeur relativement stable dans le temps. Suivant un des exemples précédemment cité, il suffit de répéter le processus pour différentes fenêtres déterminées chacune par des valeurs particulières rangées dans les registres 81 et 82.

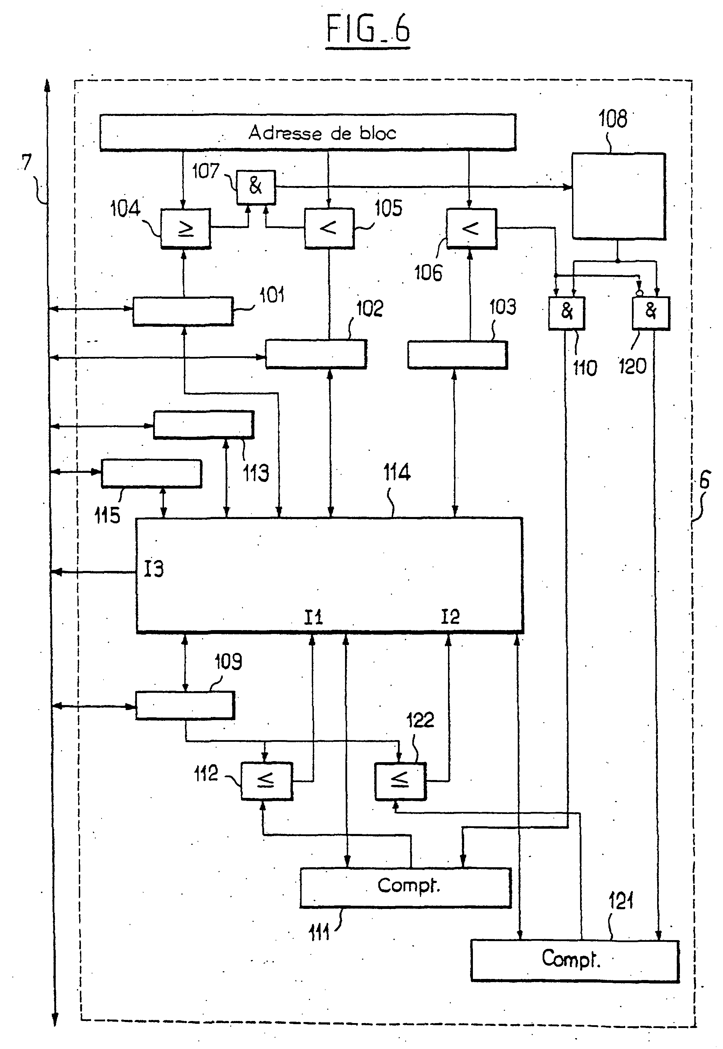

La figure 6 présente des détails de l'organe 6 pour obtenir une fenêtre la plus chaude parmi plusieurs autres sans nécessiter de processus exécuté à l'extérieur de l'organe 6. Un registre 101 est destiné à contenir une première adresse logique à l'intérieur de l'espace mémoire de la machine. Un registre 102 est destiné à contenir une deuxième adresse logique à l'intérieur de l'espace mémoire de la machine. La première adresse logique, dite adresse de début, est inférieure à la deuxième adresse logique, dite adresse de fin. Lorsque l'organe 6 génère une transaction relative à une adresse de bloc, précédemment prise en compte depuis le bus 7 ou la liaison 17, cette adresse est comparée au contenu du registre 101 au moyen d'un comparateur 104 et au contenu du registre 102 au moyen d'un comparateur 105. Si l'adresse de bloc est supérieure au contenu du registre 101 et inférieure au contenu du registre 102, un circuit logique 107 signale une appartenance du bloc à une fenêtre de la mémoire de la machine, dite fenêtre autofocus, délimitée par ladite adresse de début et ladite adresse de fin. Le circuit logique 107 valide un circuit logique 108 identique au circuit logique 88 pour émettre un signal à chaque transaction concernant un bloc appartenant à ladite fenêtre autofocus, ou identique au circuit logique 92 pour émettre une valeur de latence concernant un bloc appartenant à ladite fenêtre autofocus. Un registre 103 est destiné à contenir une troisième adresse logique comprise entre celle contenue dans le registre 101 et celle contenue dans le registre 102. L'adresse du bloc pris en compte par l'organe 6 est comparée au contenu du registre 103 au moyen d'un comparateur 106.

Le registre 103 délimite deux sous fenêtres de ladite fenêtre autofocus. Un circuit logique 110 valide les signaux générés par le circuit logique 108 concernant des adresses d'une première sous fenêtre d'adresses supérieures au contenu du registre 101 et inférieures au contenu du registre 103. Un circuit logique 120 valide les signaux générés par le circuit logique 108 concernant des adresses d'une deuxième sous fenêtre d'adresses supérieures au contenu du registre 103 et inférieures au contenu du registre 102.

Un compteur 111 est destiné à cumuler les signaux générés par le circuit logique 108 et validés par le circuit logique 110. Le contenu du compteur 111 représente alors une quantité d'activité concernant les données adressées dans la première sous fenêtre.

Un compteur 121 est destiné à cumuler les signaux générés par le circuit logique 108 et validés par le circuit logique 120. Le contenu du compteur 121 représente alors une quantité d'activité concernant les données adressées dans la deuxième sous fenêtre.

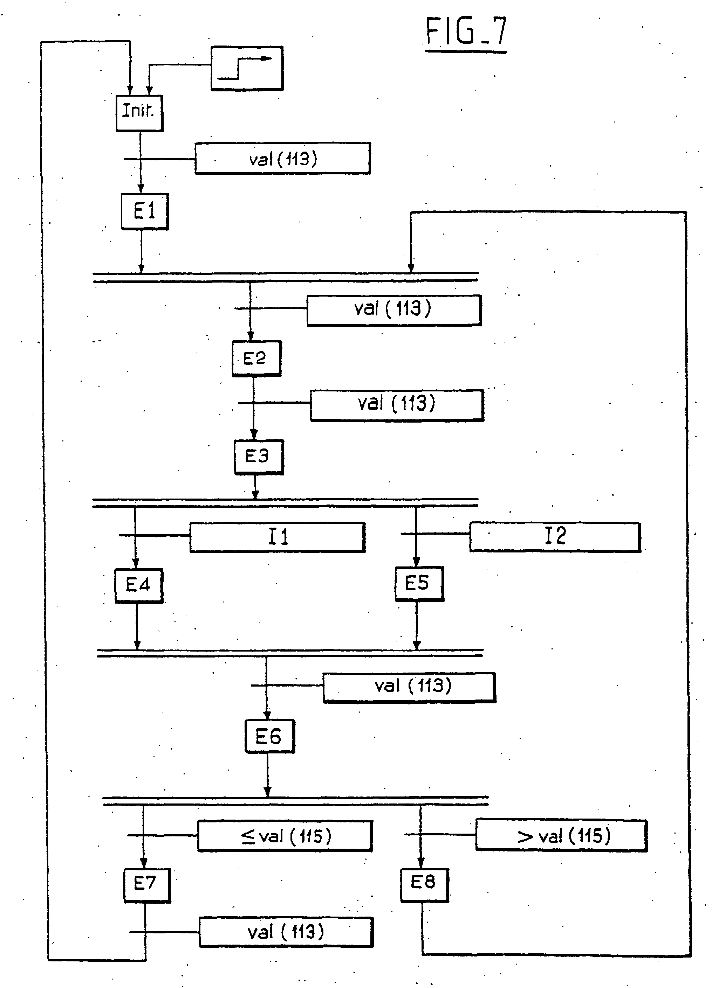

Un registre 109 est destiné à contenir une valeur de seuil, en terme de quantité d'activité précédemment définie. Un comparateur 112 émet un signal I1 vers un séquenceur 114 si le contenu du registre 109 est inférieur au contenu du compteur 111. Un comparateur 122 émet un signal 12 vers le séquenceur 114 si le contenu du registre 109 est inférieur au contenu du compteur 121. Le fonctionnement du séquenceur 114 sera expliqué en référence à la figure 7.

Un registre 115 est destiné à contenir une valeur de taille minimale pour la fenêtre autofocus, valeur calculée comme étant la différence entre les contenus des registres 101 et 102.

Les registres 101, 102, 109 et 115 sont accessibles en lecture et en écriture sur le bus 7 et par le séquenceur 114. Les compteurs 111, 121 sont accessibles en lecture et en écriture par le séquenceur 114. Un registre de contrôle 113 est accessible en lecture écriture pour permettre de gérer des séquences exécutées par le séquenceur. 114, en fonction d'états bas et hauts de par exemple sept bits numérotés de zéro à six. L'état haut du bit zéro empêche toute incrémentation des compteurs 111 et 121 par le circuit logique 108. L'état bas du bit zéro n'empêche pas l'incrémentation des compteurs 111 et 121 par le circuit logique 108. L'état bas du bit un empêche toute interruption générée par le séquenceur 114 d'intervenir sur l'incrémentation des compteurs 111 et 121 par le circuit logique 108. L'état haut du bit un empêche toute incrémentation des compteur 111 et 121 par le circuit logique 108, suite à une interruption générée par le séquenceur 114. L'état bas du bit deux désactive toute génération d'interruption par le séquenceur 114. L'état haut du bit deux active la génération d'interruption par le séquenceur 114 lorsque le contenu du registre 115 dépasse la différence entre les contenus des registres 102 et 101. L'état bas du bit trois n'intervient pas sur l'évolution des compteurs 111 et 121. L'état haut du bit trois positionne le contenu des compteurs 121 et 122 à une valeur nulle. L'état des bits quatre et cinq codent une valeur de diviseur selon une puissance de deux d'exposant compris entre zéro et trois. L'état bas du bit six indique que la taille de la fenêtre autofocus est supérieure à la valeur contenue dans le registre 115. L'état haut du bit six indique que la taille de la fenêtre autofocus est inférieure à la valeur contenue dans le registre 115.

Le diagramme de Petry de la figure 7 permet d'expliquer un fonctionnement du séquenceur 114. Une valeur contenue dans le registre 113 pour laquelle les bits zéro à trois forcent une valeur nulle dans les compteurs 111 et 121, valide le passage d'une étape initiale du séquenceur à une étape E1.

En étape E1, un processus exécuté dans le module 10, extérieurement à l'organe 6 a la possibilité d'écrire un état initial de fenêtre autofocus dans les registres 101, 102, 109, 113 et 115. Une valeur du registre 113 avec un état bas du bit six, valide le passage de l'étape E1 à une étape E2.

En étape E2, la demi somme des valeurs contenues dans les registres 101 et 102 est écrite dans le registre 103 puis le bit zéro du registre 113 est mis à l'état bas pour activer les compteurs 111 et 121. La mise à l'état bas du bit zéro fait passer l'organe 6 dans un état correspondant à une étape E3.

Dans l'état correspondant à l'étape E3, le compteur 111, respectivement 121, accumule la quantité d'activité, ici directement assimilable à la chaleur de la première, respectivement de la deuxième sous fenêtre de la fenêtre autofocus. La réception d'un signal d'interruption I1 par le séquenceur 114 active une étape E4. La réception d'un signal d'interruption 12 par le séquenceur 114 active une étape E5. Le signal I1 généré par le comparateur 112 indique que la chaleur de la première sous fenêtre a dépassé le seuil contenu dans le registre 109 avant celle de la deuxième sous fenêtre. Le signal I2 généré par le comparateur 122 indique que la chaleur de la deuxième sous fenêtre a dépassé le seuil contenu dans le registre 109 avant celle de la première sous fenêtre. Un double trait horizontal sur le diagramme de Petry de la figure 7 symbolise un ou logique d'activation des étapes E4 ou E5.

En étape E4, la première sous fenêtre est reconnue plus chaude que la deuxième sous fenêtre. La valeur du registre 103 est écrite dans le registre 102 par le séquenceur 114, de façon à redéfinir la fenêtre autofocus comme étant égale à la première sous fenêtre. Le bit zéro du registre 113 est mis à l'état haut par le séquenceur 114 pour désactiver les compteurs 111 et 121.

En étape E5, la deuxième sous fenêtre est reconnue plus chaude que la première sous fenêtré. La valeur du registre 103 est écrite dans le registre 101 par le séquenceur 114, de façon à redéfinir la fenêtre autofocus comme étant égale à la deuxième sous fenêtre. Le bit zéro du registre 113 est mis à l'état haut par le séquenceur 114 pour désactiver les compteurs 111 et 121.

L'état haut du bit zéro du registre 113 active alors une étape E6 dans laquelle est calculée la taille de la fenêtre autofocus en soustrayant le contenu du registre 101 du contenu du registre 102. La taille ainsi obtenue est comparée à la valeur contenue dans le registre 115. Une taille inférieure ou égale à la valeur du registre 115 active une étape E7. Une taille supérieure à la valeur du registre 115 active une étape E8.

Dans l'étape E7, la fenêtre autofocus a convergé sur une fenêtre de taille minimale telle qu'au moins une fenêtre de taille identique soit moins chaude que cette fenêtre. Une interruption I3 est générée sur le bus 7 et le bit six du registre 113 est mis à un état haut de façon à signaler la convergence obtenue pour permettre à un processus extérieur à l'organe 6 de lire le contenu des registres 101 et 102. L'état haut du bit six replace alors le séquenceur dans son étape initiale.

Dans l'étape E8, la fenêtre autofocus n'a pas convergé sur une fenêtre de taille minimale et le bit six du registre 113 n'est pas modifié. La valeur contenue dans le registre 109 est divisée par la puissance de deux codée par les bits quatre et cinq du registre 113. Le fait de pouvoir réduire la valeur de seuil permet d'accélérer l'atteinte du seuil par l'un des compteurs 111 ou 121 sur les nouvelles sous fenêtres déterminées par la suite. En effet, la taille de la fenêtre autofocus se réduisant après chaque passage par l'étape E6, il est possible que la quantité d'activité liée à cette fenêtre demande un temps plus long pour être comparable à celle de la fenêtre autofocus précédente. L'état bas du bit six réactive alors l'étape E2. De la sorte, une boucle sur les étapes E2 à E6 se répétera jusqu'à passage dans l'étape E7.

Un processus extérieur à l'organe 6, activé par l'interruption 13, peut consulter la valeur du bit six du registre 113 pour voir si la fenêtre autofocus a convergé sur une fenêtre parmi les plus chaudes. Ce même processus peut interrompre le séquenceur 114 en positionnant le bit zéro et le bit six du registre 113 à un état haut et en écrivant une valeur nulle dans le registre 109. Il se peut en effet que la chaleur de la fenêtre autofocus soit trop faible pour permettre une convergence suffisamment rapide. Le processus peut alors charger dans un ou plusieurs des registres 101, 102, 109, 113 et 115, d'autres valeurs plus aptes à assurer une convergence rapide.

Il convient d'apprécier qu'un processus exécuté à l'extérieur de l'organe 6 n'intervient que sur le démarrage, l'arrêt ou à la fin du déroulement de séquences exécutées par le séquenceur 114. Ceci évite au processus exécuté à l'extérieur de l'organe 6, d'influer sur les mesures effectués par l'organe 6.

## Revendications

1. Machine informatique avec mémoire à accès non uniforme et cohérence antémémoire, constituée de plusieurs modules (10,20,40,60), un module considéré (10) comprenant un organe (6) pour assurer une cohérence de données avec d'autres modules (20,40,60), ledit organe (6) comprenant au moins:
- un premier registre (81,101) destiné à contenir une première adresse physique de la mémoire,
- un deuxième registre (82,102) destiné à contenir une deuxième adresse physique de la mémoire,
- des premiers moyens (90,95,111,121,88,92,108) pour mesurer une quantité d'activité relative à des données dont les adresses sont comprises entre ladite première adresse physique et ladite deuxième adresse physique, les premiers moyens comprenant un compteur (90) de transactions du module considéré avec les autres modules, relatives à des données dont les adresses sont comprises entre ladite première adresse physique et ladite deuxième adresse physique, et un compteur (95) de latences de transactions du module considéré avec les autres modules, relatives à des données dont les adresses sont comprises entre ladite première adresse physique et ladite deuxième adresse physique,
- un troisième registre (83,93,109) destiné à contenir une valeur de seuil pour mesurer ladite quantité d'activité,
- des deuxièmes moyens (91,94,112,122) pour détecter un dépassement de ladite valeur de seuil par la quantité d'activité mesurée par les premiers moyens.

2. Machine informatique avec mémoire à accès non uniforme et cohérence antémémoire selon la revendication 1, **caractérisée en ce que** l'organe (6) comprend un quatrième registre (103) destiné à contenir une troisième adresse logique comprise entre ladite première et ladite seconde adresse logique et **en ce que** les premiers moyens comprennent un compteur (111) de transactions du module considéré avec les autres modules, relatives à des données dont les adresses sont comprises entre ladite première adresse physique et ladite troisième adresse physique et un compteur (121) de transactions du module considéré avec les autres modules, relatives à des données dont les adresses sont comprises entre ladite troisième adresse physique et ladite deuxième adresse physique.

3. Machine informatique avec mémoire à accès non uniforme et cohérence antémémoire selon la revendication 1, **caractérisée en ce que** l'organe (6) comprend un quatrième registre (103) destiné à contenir une troisième adresse logique comprise entre ladite première et ladite seconde adresse logique et **en ce que** les premiers moyens comprennent un compteur (111) de latences de transactions du module considéré avec les autres modules, relatives à des données dont les adresses sont comprises entre ladite première adresse physique et ladite troisième adresse physique et un compteur (121) de latences de transactions du module considéré avec les autres modules, relatives à des données dont les adresses sont comprises entre ladite troisième adresse physique et ladite deuxième adresse physique.

4. Machine informatique avec mémoire à accès non uniforme et cohérence antémémoire selon la revendication 2 ou 3, **caractérisée en ce que** l'organe (6) comprend un séquenceur (114) pour écrire la contenu du quatrième registre (103) dans le deuxième registre (102) lorsque le contenu du compteur (111) dépasse le contenu du troisième registre (109), pour écrire le contenu du quatrième registre (103) dans le premier registre (101) lorsque le contenu du compteur (121) dépasse le contenu du troisième registre (109), et pour écrire dans le quatrième registre (103) une valeur contenue entre celles du premier registre (101) et du deuxième registre (102).

5. Machine informatique avec mémoire à accès non uniforme et cohérence antémémoire selon la revendication 4, **caractérisée en ce que** l'organe (6) comprend un cinquième registre (115) destiné à contenir une valeur de seuil sur une différence des contenus du premier (101) et du deuxième registre (102) pour ramener le séquenceur (114) dans son état initial lorsque ladite valeur de seuil dépasse ladite différence.

## Patentansprüche

1. Maschine mit nichtuniformen Speicherzugriffen und zusammenhängendem Pufferspeicher, welche aus mehreren Modulen (10, 20, 40, 60) besteht, wobei ein betrachtetes Modul (10) eine Einrichtung (6) zur Sicherstellung eines Zusammenhangs von Daten mit anderen Modulen (20, 40, 60) beinhaltet, wobei diese Einrichtung mindestens ausweist:
- ein erstes Register (81, 101), das fur die Aufnahme einer ersten physischen Adresse des Speichers vorgesehen ist,
- ein zweites Register (82, 102), das für die Aufnahme einer zweiten physischen Adresse des Speichers vorgesehen ist,
- erste Einrichtungen (90, 95, 111, 121, 88, 92, 108) zum Messen einer Anzahl von Aktivitäten bezüglich Daten, deren Adressen zwischen der ersten physischen Adresse und der zweiten physischen Adresse enthalten sind, wobei die ersten Einrichtungen einen Zähler (90) von Datenaustauschen des betrachteten Moduls mit den weiteren Modulen aufweisen, sich auf Daten beziehend, deren Adressen zwischen der ersten physischen Adresse und der zweiten physischen Adresse enthalten sind, und einen Zähler (92) von Latenzzeiten von Datenaustauschen des betrachteten Moduls mit den weiteren Modulen aufweisen, sich auf Daten beziehend, deren Adressen zwischen der ersten physischen Adresse und der zweiten physischen Adresse enthalten sind,
- ein drittes Register (83, 93, 109), das für die Aufnahme eines Schwellenwerts für das Messen der Anzahl von Aktivitäten vorgesehen ist,
- zweite Einrichtungen (91, 94, 112, 122) zur Ermittlung, ob dieser Schwellenwert von der durch die ersten Einrichtungen gemessenen Anzahl von Aktivitäten überschritten wird.

2. Maschine mit nichtuniformen Speicherzugriffen und zusammenhängendem Pufferspeicher nach Anspruch 1, **dadurch gekennzeichnet, dass** die Einrichtung (6) ein viertes Register (103) aufweist, welches zur Aufnahme einer dritten logischen Adresse vorgesehen ist, welche zwischen der ersten physischen Adresse und der zweiten physischen Adresse enthalten ist, und dass die ersten Einrichtungen einen Zähler (111) von Datenaustauschen des betrachteten Moduls mit den weiteren Modulen beinhalten, sich auf Daten beziehend, deren Adressen zwischen der ersten physischen Adresse und der dritten physischen Adresse enthalten sind, und einen Zähler (121) von Datenaustauschen des betrachteten Moduls mit den weiteren Modulen beinhalten, sich auf Daten beziehend, deren Adressen zwischen der dritten physischen Adresse und der zweiten physischen Adresse enthalten sind.

3. Maschine mit nichtuniformen Speicherzugriffen und zusammenhängendem Pufferspeicher nach Anspruch 1, **dadurch gekennzeichnet, dass** die Einrichtung (6) ein viertes Register (103) aufweist, welches zur Aufnahme einer dritten logischen Adresse vorgesehen ist, welche zwischen der ersten physischen Adresse und der zweiten physischen Adresse enthalten ist, und dass die ersten Einrichtungen einen Zähler (111) von Latenzzeiten von Datenaustauschen des betrachteten Moduls mit den weiteren Modulen beinhalten, sich auf Daten beziehend, deren Adressen zwischen der ersten physischen Adresse und der dritten physischen Adresse enthalten sind, und einen Zähler (121) von Latenzzeiten von Datenaustauschen des betrachteten Moduls mit den weiteren Modulen beinhalten, sich auf Daten beziehend, deren Adressen zwischen der dritten physischen Adresse und der zweiten physischen Adresse enthalten sind.

4. Maschine mit nichtuniformen Speicherzugriffen und zusammenhängendem Pufferspeicher nach Anspruch 2 oder 3, **dadurch gekennzeichnet, dass** die Einrichtung (6) einen Folgeschalter (114) aufweist, um den Inhalt des vierten Registers (103) in das zweite Register (102) einzuschreiben, wenn der Inhalt des Zählers (111) den Inhalt des dritten Registers (109) überschreitet, um den Inhalt des vierten Registers (103) in das erste Register (101) einzuschreiben, wenn der Inhalt des Zählers (121) den Inhalt des dritten Registers (109) überschreitet, und um in das vierte Register (103) einen Wert einzuschreiben, welcher unter denen des ersten Registers (101) und des zweiten Registers (102) enthalten ist.

5. Maschine mit nichtuniformen Speicherzugriffen und zusammenhängendem Pufferspeicher nach Anspruch 4, **dadurch gekennzeichnet, dass** die Einrichtung (6) ein fünftes Register (115) aufweist, welches für die Aufnahme eines Schwellenwerts vorgesehen ist, der auf einer Differenz der Inhalte des ersten (101) und des zweiten Registers (102) beruht, um den Folgeschalter (114) in seinen anfänglichen Zustand zurück zu setzen, wenn dieser Schwellenwert diese Differenz überschreitet.

## Claims

1. A computer hardware device having non uniform memory access and cache coherency, formed by a plurality of modules (10, 20, 40, 60), a module (10) under consideration comprising a member (6) for ensuring coherency of data with other modules (20, 40, 60), the said member (6) comprising at least:
- a first register (81, 101) intended to contain a first physical address in the memory,
- a second register (82, 102) intended to contain a second physical address in the memory,
- first means (90, 95, 111, 121, 88, 92, 108) for measuring a level of activity relating to data whereof the addresses are between the said first physical address and the said second physical address, the first means comprising a counter (90) for transactions of the module under consideration with the other modules, relating to data whereof the addresses are between the said first physical address and the said second physical address, and a counter (95) for latencies of transactions of the module under consideration with the other modules, relating to data whereof the addresses are between the said first physical address and the said second physical address,
- a third register (83, 93, 109) intended to contain a threshold value for measuring the said level of activity,
- second means (91, 94, 112, 122) for detecting that the said threshold value has been exceeded by the level of activity measured by the first means.

2. A computer hardware device having non uniform memory access and cache coherency according to Claim 1, **characterised in that** the member (6) comprises a fourth register (103) intended to contain a third logical address between the said first and the said second logical address, and **in that** the first means comprise a counter (111) for transactions of the module under consideration with the other modules, relating to data whereof the addresses are between the said first physical address and the said third physical address, and a counter (121) for transactions of the module under consideration with the other modules, relating to data whereof the addresses are between the said third physical address and the said second physical address.

3. A computer hardware device having non uniform memory access and cache coherency according to Claim 1, **characterised in that** the member (6) comprises a fourth register (103) intended to contain a third logical address between the said first and the said second logical address, and **in that** the first means comprise a counter (111) for latencies of transactions of the module under consideration with the other modules, relating to data whereof the addresses are between the said first physical address and the said third physical address, and a counter (121) for latencies of transactions of the module under consideration with the other modules, relating to data whereof the addresses are between the said third physical address and the said second physical address.

4. A computer hardware device having non uniform memory access and cache coherency according to Claim 2 or 3, **characterised in that** the member (6) comprises a sequencer (114) for recording the content of the fourth register (103) in the second register (102) when the content of the counter (111) exceeds the content of the third register (109), for recording the content of the fourth register (103) in the first register (101) when the content of the counter (121) exceeds the content of the third register (109), and for recording in the fourth register (103) a value between those in the first register (101) and the second register (102).

5. A computer hardware device having non uniform memory access and cache coherency according to Claim 4, **characterised in that** the member (6) comprises a fifth register (115) intended to contain a threshold value regarding a difference between the content of the first register (101) and that of the second register (102), in order to return the sequencer (114) to its initial condition when the said threshold value exceeds the said difference.
